# EUROPÄISCHE PATENTSCHRIFT

(11) **EP 2 043 306 B1**
(45) Veröffentlichungstag und Bekanntmachung des Hinweises auf die Patenterteilung: **15.04.2015**
(21) Anmeldenummer: 07019154.9
(22) Anmeldetag: 28.09.2007
(51) Int. Cl.: H04L 12/713, H04L 12/751, H04L 12/703

(54) **Verfahren zur Organisation von Netzknoten in einem paketorientierten Netzwerk**
Method for organising network nodes in a packet-oriented network
Procédé destiné à l'organisation de noeuds dans un réseau orienté paquet

(43) Veröffentlichungstag der Anmeldung: 01.04.2009
(73) Patentinhaber: Unify GmbH & Co. KG, 81379 München (DE)
(72) Erfinder: Veits, Oliver, Dr., 85221 Dachau (DE)
(74) Vertreter: Fritzsche, Thomas

(56) Entgegenhaltungen:
- US-A- 5 935 215
- US-A1- 2003 126 268
- US-A1- 2003 202 473
- US-A1- 2004 117 251
- US-B1- 6 954 436
- HINDEN R ET AL: "Virtual Router Redundancy Protocol (VRRP); rfc3768.txt;" IETF STANDARD, INTERNET ENGINEERING TASK FORCE, IETF, CH, April 2004 (2004-04), XP015009548 ISSN: 0000-0003

## Beschreibung

Die Erfindung betrifft ein Verfahren zur Organisation von Netzknoten nach dem Oberbegriff des Anspruchs 1.

Im Stand der Technik sind Netzknotenelemente auf der Ebene der Vermittlungsschicht bzw. Schicht 3 bekannt. Ein solches Netzknotenelement besitzt mindestens drei Schnittstellen, an denen bidirektional Datenpakete mit Netzelementen eines paketorientierten Netzwerks (z.B. Rechnersystemen bzw. »Hosts«) und/oder mit anderen Netzknotenelementen ausgetauscht werden.

Derartige Netzknotenelemente werden in der Fachwelt auch als »Router« bezeichnet. Je nach Einsatz des Netzknotenelements treten weitere Aufgaben hinzu, so dass neben der Bezeichnung »Router« weitere Bezeichnungen für spezifisch ausgestaltete Netzknotenelemente existieren. Aus Gründen einer einfachen Darstellung wird im Folgenden der Begriff Router verwendet, ohne hierdurch weitere spezifisch ausgestaltete Netzknotenelemente auszuschließen und ohne die Allgemeinheit des beschriebenen Netzknotenelements einzuschränken.

In einem Router werden im Wesentlichen zwei Prozesse zur Ausführung gebracht. Ein erster Prozess nimmt ein an einer Schnittstelle des Routers eintreffendes Datenpaket entgegen und bestimmt eine Schnittstelle des Routers, an die das Datenpaket weitergeleitet wird. Dieser erste Prozess wird Weiterleitung bzw. Forwarding genannt. Zur Bestimmung einer Schnittstelle, an die das eingetroffene Datenpaket weitergeleitet wird, wird ein Routing-Algorithmus herangezogen, welcher anhand von Einträgen im Datenpaket und anhand von im Router vorgehaltenen Informationen zur Umgebung des Routers eine Schnittstelle für das ausgehende Datenpaket bestimmt.

Ein zweiter Prozess dient einer Verwaltung des Routing-Algorithmus mit dem Ziel, den Algorithmus dahingehend zu optimieren, dass die Wahl der Schnittstelle für das ausgehende Datenpaket möglichst effizient im Sinne eines kurzen Pfades im paketorientierten Netzwerk ist. Neben der möglichst kurzen Pfadbestimmung (»Routing«) treten weitere Kriterien hinzu, auf die der Routing-Algorithmus üblicherweise zu optimieren ist.

Eine heute gängige Verwaltung des Routing-Algorithmus wird auch als »adaptives Routing« bezeichnet. Beim adaptiven Routing werden - im Gegensatz zu einem statischen Routing - Änderungen im Datenverkehr und in der Topologie des paketorientierten Netzwerks für eine Anpassung des Routing-Algorithmus berücksichtigt. Der Router kommuniziert - mittels des oben genannten zweiten Prozesses - hierzu mit benachbarten Routern um deren Verbindungszustand und eine »Metrik« zur Optimierung des Routing-Algorithmus zu bestimmen. In einer Routing-Tabelle sind dabei die bestmöglichen Pfade eingetragen, während Link-State- oder topologische Datenbanken Informationen zum Verbindungszustand und zur Umgebung des Routers beinhalten. In allgemeiner Weise wird der Begriff Routing-Tabelle häufig für eine Kombination aus den oben genannten Funktionseinheiten Routing-Tabelle, Link-State- und/oder topologische Datenbanken verwendet.

Die Metrik oder auch »Schnittstellenmetrik« liefert eine Maßzahl zur Bestimmung des effizientesten Pfades. Mit Hilfe der Metrik bestimmt der Routing-Algorithmus, ob eine Wahl einer Schnittstelle des Routers - und damit ein gewählter Pfad - im Vergleich zu einer anderen effizienter ist. Bei mehreren möglichen Schnittstellen wird gängigerweise diejenige Schnittstelle ausgewählt, welche die geringste Metrik aufweist. Die Schnittstelle mit der geringsten Metrik ist beispielsweise diejenige Schnittstelle, bei der ein sich ergebender Pfad die geringste Distanz zum Zielsystem aufweist. Neben der Distanz können weitere Kriterien in die Metrik einfließen, wie zum Beispiel die auf einem Pfad erzielbare Bandbreite, die auf einem Pfad zu erwartenden Verzögerung, die Anzahl der auf dem Pfad liegenden Netzknotenelemente (»Hop Count«), usw.

Bei einer Pfadbestimmung von Datenpaketen durch Netzwerke wird einem Ausfall von Teilstrecken auf dem Pfad zum Ziel durch das oben beschriebene dynamische Routing entgegengewirkt. Fällt jedoch der erste Router auf einem Pfad aus, so ist dieser Fehler oftmals nicht durch dynamisches Routing zu beheben.

Ein Grund für eine solche zwangsläufige Lücke liegt darin, dass für einen Hoste oder eine Mehrzahl von Hosts üblicherweise ein Router als direkter »Ansprechpartner« vermerkt ist, welcher am Rand des Teilnetzwerks eine Kommunikation mit anderen (Teil-) Netzwerken gewährleistet. Die Adresse dieses Routers wird üblicherweise statisch im jeweiligen Host vermerkt. Der entsprechende Router wird oftmals als »Standardgateway« bezeichnet.

Ohne Ergreifung zusätzlicher Maßnahmen wären nach einem Ausfall des ersten Routers bzw. Standardgateways die betroffenen Hosts von jeglicher über das Teilnetz hinausreichenden Kommunikation abgeschnitten, selbst dann, wenn noch aktive Router im gleichen Teilnetz verfügbar wären.

Zur Lösung dieses Problems sind Protokolle zur Steigerung der Verfügbarkeit unter Verwendung redundanter Standardgateways vorgeschlagen worden, welche als eine Protokollfamilie FHRP (First-Hop Routing Protocol) klassifiziert werden. Das Protokoll HSRP (Hot Standby Router Protocol) der Firma Cisco Systems Inc., San Jose, California, USA, sieht vor, mehrere Router zu einer logischen Gruppe zusammenzufassen, welche über das paketorientierte Netzwerk als ein logisches Standardgateway angesprochen wird. Die alternativen Protokolle VRRP (Virtual Router Redundancy Protocol) sowie GLBP (Gateway Load Balancing Protocol) verfolgen das gleiche Ziel mit ähnlichen Methoden.

Die oben genannten Protokolle zur Steigerung der Verfügbarkeit reagieren auf einen Ausfall eines Routers innerhalb eines redundanten Verbundes von Routern mit einem Wechsel auf einen anderen Router, wobei die Adresse des logischen Standardgateways unverändert bleibt.

Bei einem Ausfall eines ersten Routers, welcher bis dahin als Standardgateway arbeitete, übernimmt ein zweiter Router die Rolle des logischen Standardgateways. Hierzu werden eine virtuelle IP-Adresse (Internet Protocol) und eine virtuelle MAC-Adresse (Media Access Control) des ersten Routers auf den zweiten Router übertragen, welcher somit die Funktion des logischen Standardgateway übernimmt. Durch die Übertragung der MAC- und die IP-Adresse auf den zweiten Router wird erreicht, dass ein jeweiliger Host im Teilnetzwerk zur Adressierung des logischen Standardgateways nach wie vor die im Host statisch vermerkte Adresse des logischen Standardgateways verwenden kann, wenngleich nach dem Ausfall des ersten Routers nunmehr der zweite Router die Funktion des logischen Standardgateways einnimmt. Die Hosts müssen also keine Aktualisierung Ihrer in einem jeweiligen ARP-Cache (Address Resolution Protocol) vorgehaltenen Adressen vornehmen.

Die oben genannte Vorgehensweise unter Verwendung von Protokollen zur Steigerung der Verfügbarkeit des Standardgateways gewährleisten zwar innerhalb des Teilnetzwerks eine Verbindung über die Grenzen des Teilnetzwerks in andere Netzwerke, führen jedoch dazu, dass der die Rolle des Standardgateways aufgebende erste Router den Wechsel des Standardgateways nicht in allen Schnittstellen berücksichtigt. Dies kann dazu führen, dass Kommunikationsverbindungen aus einem anderen (Teil-) Netzwerk nach wie vor über den ersten Router geleitet wird, der indes keine Verbindung zu seinem zugeordneten Host aufbauen kann.

In HINDEN R ET AL: "Virtual Router Redundancy Protocol (VPRP); rfc3768.txt;" IETF STANDARD, INTERNET ENGINEERING TASK FORCE, IETF, CH, April 2004 (2004 - 04), XP015009548, ISSN: 0000-0003 ist ein virtuelles Routerprotokoll beschrieben. US 6954 436 B1 offenbart ein Verfahren und eine Vorrichtung zum Auswählen redundanter Router mittel Ping-Tracking, wobei das Stand-by Router Protokoll (SPR) verwendet wird. Bei dem in US 2004/0117251 A1 beschriebenen Verfahren ermittelt ein Knoten eine Zustandsänderung, die sich auf den Übergang zwischen einem aktivierten und deaktivierten Zustand oder umgekehrt beziehen kann, einer benachbarten Komponente. Der Knoten variiert die Kosten des mit der Änderung verbundenen Verbindungsgliedes um einen inkrementellen Wert und gibt die variierten Kosten durch Versendung eines link state packet (LSP) bekannt. Das in US 5,935,215 beschriebene Verfahren umfasst das Senden einer Aktualisierung des Routing Information Protocol (RIP) zu einer anderen Ressource mit einem IP-Quellenadresse-Satz, der so eingestellt ist, als ob er über das fehlgeschlagene Verbindungsglied übertragen worden wäre. Hierdurch wird angezeigt, dass das fehlgeschlagene Verbindungsglied nicht länger aktiv ist und eine alternative Route das bevorzugte Mittel zum Erreichen der Ressource ist. In US 2003/0202473 A1 wird ein künstlich hoher Hop-count für einen gegebenen Port bekanntgegeben. Bei einem Ausfall oder Verlust der Erreichbarkeit in einem Anschluss, der mit diesem Port verbunden ist, wird eine Bekanntgabe eines niedrigeren Hop-count für den Sicherungs- oder redundanten Anschluss für den gegebenen Port ausgelöst, wodurch ein schnelles Rerouting des ankommenden Verkehrs zum Sicherungs- oder redundanten Anschluss verursacht wird. In US 2003/0126268 A1 ist ein Verfahren zur Aufrechterhaltung von symmetrischen Routing in einem Kommunikationssystem mit einer Server-Farm beschrieben, die über einen Internet-Zugangs-Router IAR mit dem Internet verbundenen ist. Die Server-Farm umfasst mindestens zwei WEB-Server und mindestens zwei Firewalls. Der IAR wählt die Firewall zur Kommunikation mit einem der WEB-Server anhand einer Schnittstelle einer der Firewalls zu diesem WEB-Server, wobei dieser Schnittstelle geringste Kosten zugeordnet sind. Bei Ausfall einer Verbindung zwischen einem der WEB-Server und einer der Firewalls werden in dem IAR die Kosten der von der ausgefallenen Verbindung betroffenen Firewall auf unendlich eingestellt.

Es ist eine Aufgabe der vorliegenden Erfindung ein verbessertes Verfahren für ein Verfahren zur Organisation von Netzknoten in einem paketorientierten Netzwerk anzugeben.

Eine Lösung der Aufgabe erfolgt hinsichtlich ihres Verfahrensaspekts durch ein Verfahren mit den Merkmalen des Patentanspruchs 1.

Die Erfindung macht von einem Verfahren zur Organisation von Netzknoten bzw. Router in einem paketorientierten Netzwerk Gebrauch, bei dem in einem paketorientierten Netzwerk für den Fall, dass eine zumindest teilweise Unerreichbarkeit eines einem ersten Netzknoten zugeordneten Netzelements an einer Schnittstelle des ersten Netzknotens detektiert wird, ein zweiter Netzknoten als Standardgateway eingerichtet wird. Zu diesem Zweck werden beispielsweise die oben genannten Protokolle zur Steigerung der Verfügbarkeit eingesetzt, welche auf einen Ausfall eines Netzknotens innerhalb eines redundanten Verbundes von Netzknoten mit einem Wechsel auf einen anderen Netzknoten reagieren, wobei die Adresse des logischen Standardgateways unverändert bleibt.

Das erfinderische Verfahren ist dadurch gekennzeichnet, dass im Zuge der Einrichtung des zweiten Netzknotens als Standardgateway eine Überprüfung der Schnittstellenmetrik am ersten und/oder zweiten Router erfolgt und dass in Folge der für die Schnittstelle detektierten Unerreichbarkeit eine Anpassung der Schnittstellenmetrik erfolgt.

Mit Anwendung des erfindungsgemäßen Verfahrens wird also in vorteilhafter Weise ein Wechsel des Standardgateway mit einer Verwaltung der Schnittstellenmetrik kombiniert. Durch diese Maßnahme ist sichergestellt, dass asymmetrisches Routing unter allen Umständen vermieden wird.

Vorteilhafte Weiterbildungen der Erfindung sind in den Unteransprüchen angegeben.

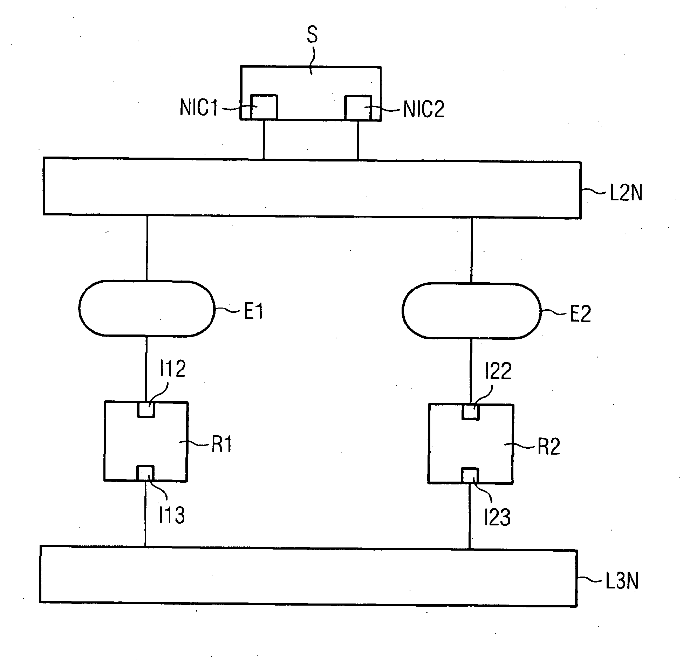

Ein Ausführungsbeispiel mit weiteren Vorteilen und Ausgestaltungen der Erfindung wird im Folgenden anhand der Zeichnung näher erläutert.

Dabei zeigt die einzige Figur einen Ausschnitt aus einem mehrere Teilnetze umfassenden paketorientierten Netzwerk mit zugehörigen Funktionskomponenten.

Die Figur zeigt einen Server S welcher an ein Schicht-2-Netzwerk L2N angeschlossen ist. Eine Verbindung erfolgt beispielsweise über zwei Netzwerkschnittstellen NIC1, NIC2. Für den Einsatz der vorliegenden Erfindung sind zwei Netzwerkschnittstellen NIC1, NIC2 jedoch optional. Stattdessen kann der Server S auch über eine Schnittstelle angeschlossen sein.

Ein erster Roter R1 und ein zweiter Router R2 sind mit dem Schicht-2-Netzwerk verbunden. Auf Seiten des ersten Routers R1 führt die Verbindung zum Schicht-2-Netzwerk über ein Übertragungsmedium E1 (Ethernet), entsprechend führt auf Seiten des zweiten Routers R2 eine Verbindung zum Schicht-2-Netzwerk über ein zweites Übertragungsmedium E2 (Ethernet).

Eine erste Schnittstelle I12 des Routers R1 sei aufgrund ihrer günstigen Schnittstellenmetrik die bevorzugte Schnittstelle I12 in Richtung des Schicht-2-Netzwerks. In entsprechender Weise sei eine erste Schnittstelle I22 des Routers R2 eine bevorzugte Schnittstelle in Richtung des Schicht-2-Netzwerks. Eine zweite Schnittstelle I13 des Routers R1 sei eine bevorzugte Schnittstelle in Richtung des Schicht-3-Netzwerks L3N. In entsprechender Weise sei eine zweite Schnittstelle I23 des Routers R2 eine bevorzugte Schnittstelle I23 in Richtung des Schicht-3-Netzwerks L3N.

An das Schicht-3-Netzwerk sind eine Vielzahl von Netzelementen bzw. »Clients« C1, C2 und C3 angeschlossen.

Im vorliegenden Netzwerk bzw. Teilnetzwerk sei der Router R1 das Standard-Gateway (Default Gateway) des Servers S. Dies bedeutet, dass Routers R1 den HSRP-Zustand bzw. den VRRP-Zustand »aktiv« einnimmt.

Vom Server S gesendete Datenpakete, welche einen der Clients C1,C2,C3 als Ziel haben, werden somit über das Standard-Gateway, den Router R1 geführt. Zur Vermeidung eines übermäßigen Aufkommens von »Unicast«-Meldungen im Schicht-2-Netzwerk ist es vorteilhaft, Datenpakete in umgekehrter Richtung, also von einem der Clients C1,C2,C3 in Richtung des Servers S, ebenfalls über den ersten Router R1 zu leiten. Eine solche Maßnahme vermeidet ein sogenanntes asymmetrisches Routing, welches eine ungleichmäßige Auslastung der Router R1, R2 oder ggf. auch der Netzschnittstellen NIC1, NIC2 zur Folge hätte. Um dies zu vermeiden, wird seitens eines Netzwerkadministrators üblicherweise für die Schnittstelle I12 ein niedrigerer Wert der Schnittstellenmetrik gewählt als für die Schnittstelle I22. Mit einer niedrigeren Schnittstellenmetrik wird erreicht, dass ein zugehöriger Pfad mit Einbeziehung der Schnittstelle I12 bevorzugt ausgewählt wird.

Im Folgenden wird angenommen, dass in Folge einer Störung im Schicht-2-Netzwerk L2N keine Verbindung mehr zwischen dem ersten Router 1 und dem Server S möglich ist. Der zweite Router R2 dagegen kann den Server S nach wie vor erreichen. Durch Anwendung eines »Enhanced Object Tracking«-Verfahrens kann sichergestellt werden, dass der zweite Router R2 den HSRP- bzw. VRPP-Zustand »aktiv« übernimmt. Eine solche Übernahme des Zustands »aktiv« entspricht einer Übergabe der Funktion des logischen Standardgateways vom ersten Router R1 auf den zweiten Router R2.

Eine solche Übergabe findet selbst dann statt, wenn der zweite Router R2 noch die im HSRP- bzw. VRRP-Protokoll vorgesehenen Lebenszeichen (bzw. Hello-Nachrichten) von Seiten des ersten Routers R1 erhält. Sollten derartige Hello-Nachrichten von Seiten des Routers R1 gänzlich ausbleiben, würde der zweite Router R2 ohnehin die Rolle des logischen Standard-Gateways bzw. den HSRP- oder VRRP-Zustand »aktiv« übernehmen. Der zweite Router R2 wird mit Übernahme dieses aktiven Zustands zum neuen Standard-Gateway des Servers S.

In heute gängigen Routern hat ein Wechsel des HSRP- bzw. VRRP-Zustands auf den Schnittstellen I12 und I22 keinen Einfluss auf den Routing-Algorithmus bzw. die jeweilige Schnittstellenmetrik. Wenn also das Übertragungsmedium E1 noch aktiv ist, jedoch der erste Router R1 aus einem beliebigen anderen Grund den Server S nicht erreichen kann, hat dies bei derzeitigen Routern keinen Einfluss auf eine Propagierung der Schnittstellenmetrik durch den ersten Router R1 an weitere - nicht dargestellte - Router des Schicht-2-Netzwerks.

Dies bedeutet, der erste Router R1 würde, trotzdem er keine Verbindung zum Server S aufbauen kann, nach wie vor die eingestellte geringe Routing-Metrik in Richtung des Schicht-2-Netzwerks propagieren. Infolgedessen würden auch in Gegenrichtung, d.h. von einem der Clients C1,C2,C3 in Richtung des Servers S gesendete Datenpakete nach wie vor über den ersten Router R1 geleitet werden. Dieser Router ist allerdings, aufgrund der vorher beschriebenen Umstände, nicht in der Lage, die an der zweiten Schnittstelle I13 empfangenen Datenpakete über die erste Schnittstelle I12 an den Server S weiterzuleiten. Am ersten Router R1 würde damit jede für den Server S bestimmte Kommunikation enden (»Black Hole«).

Zur Umgehung des voraus beschriebenen Black Holes wurde vorgeschlagen, das Schicht-2-Netzwerk hochredundant auszulegen, sodass lediglich mehrfache Ausfälle zu einer Spaltung des Schicht-2-Netzwerks L2N führen kann. Eine solche Maßnahme ist jedoch kostenintensiv und kann zu einer Destabilisierung des Netzwerks beitragen. Beispielsweise können dabei Spannbaumschleifen (Spanning Tree Loops) auftreten, welche eine beträchtliche negative Auswirkung auf das gesamte Netzwerk nach sich ziehen können. In schwerwiegenden Fällen kann keiner der in einem Netzwerk vorhandenen Server erreicht werden. Zudem ist eine Fehlerfindung in einem Spanning Tree eine hochkomplexe und aufwändige Aufgabe.

Im Folgenden wird ein Einsatz des erfinderischen Verfahrens beschrieben, das im Vergleich zur oben beschriebenen Umgehungslösung wesentliche Vorteile beinhaltet.

In einer Ausführungsform des erfinderischen Verfahrens ist vorgesehen, dass »Enhanced Object Tracking«-Verfahren für eine Manipulation der Schnittstellenmetrik auf Seiten der ersten Schnittstelle I12 des ersten Routers R1 bzw. auf Seiten der ersten Schnittstelle I22 des zweiten Routers R2 zu verwenden. Falls der erste Router R1 den Server S nicht erreichen kann, ist gemäß dieser Ausführungsform vorgesehen, dass die Schnittstellenmetrik der ersten Schnittstelle I12 erhöht wird, sogar für den Fall, dass das Übertragungsmedium E1 einwandfrei arbeitet.

Mit Hilfe eines Routing-Protokolls wie z.B. OSPF (Open Shortest Parth First), IS-IS (Intermediate System to Intermediate System Protocol) oder EIGRP (Enhanced Interior Gateway Routing Protocol) wird eine Änderung der Schnittstellenmetrik an die übrigen Router propagiert. Auf Seiten des Schicht-3-Netzwerks ist damit sichergestellt, dass von den Clients C1, C2, C3 gesendete Datenpakete in Richtung des Servers S nun über den zweiten Router R2 statt über den ersten Router R1 weitergeleitet werden.

Mit Anwendung des erfindungsgemäßen Verfahrens wird also der HSRP- bzw. VRRP-Zustand des Routers R1 mit der Schnittstellenmetrik in Richtung des Übertragungsmediums E1 gekoppelt.

Durch diese Maßnahme ist sichergestellt, dass asymmetrisches Routing unter allen Umständen vermieden wird.

In einem beispielhaften Szenario könnte der erste Router R1, welcher bislang als weiterleitendes Netzknotenelement für Datenpfade im Schicht-3-Netzwerk vorgesehen war, nun entscheiden, seine HSRP- bzw. VRRP-Prioriät zu verringern und damit den »Aktiv«-Zustand an den zweiten Router R2 zu übergeben. Sollte das erfindungsgemäße Verfahren in diesem Fall nicht implementiert sein, tritt nun unweigerlich asymmetrisches Routing auf. Vom Server S gesendete Datenpakete in Richtung der Clients C1, C2, C3 werden nun über den zweiten Router R2 weitergeleitet, während in der Gegenrichtung gesendete Pakete von dem Clients C1, C2, C3 in Richtung des Servers S durch den ersten Router R1 weitergeleitet werden. Ein solches asymmetrisches Routing kann wie beschrieben zu einem übermäßigen Unicast-Meldungsverkehr führen (»Unicast Flooding«).

Das erfindungsgemäße Verfahren sieht dagegen vor, die in den Protokollen HSRP bzw. VRRP verwendeten Pfadbestimmungskriterien auch für eine Entscheidung zu verwenden, welche die Schnittstellenmetrik in Richtung des Übertragungsmediums E1 verändert bzw. erhöht. Mit dieser Maßnahme wird asymmetrisches Routing eliminiert.

Zusammenfassend bietet das erfindungsgemäße Verfahren also folgende Vorteile. Zum einen können in einem Ausfallsszenario mit zerteilten Schicht-2-Netzwerken ein Vorkommen von »Black Holes«, d.h. Lücken in der Kommunikation, vermieden werden. Außerdem kann ein asymmetrisches Routing, welches durch einen Übergang des logischen Gateways vom ersten Router R1 auf den zweiten Router R2 hervorgerufen wird, eliminiert werden. Damit ist auch die Gefahr eines übermäßigen Austauschs von Unicast-Meldungen, welche zu einem hohen Ausfall aller beteiligten Netzknoten und Netzknotenelementen führen kann, ausgeschaltet.

Das voraus beschriebene Ausführungsbeispiel der Erfindung stellt eine spezielle Implementierung dar, welche gegebenenfalls einer gewählten Konfiguration anzupassen ist.

Allgemeiner gesagt besteht das Anwendungsgebiet des erfinderischen Verfahrens darin, dass der als Standard-Gateway eingerichtete erste Router R1 (erster Netzknoten) für den Fall, dass für den ersten Router R1 eine Unerreichbarkeit eines zugeordneten Netzelements, in diesem Fall der Server S, an einer Schnittstelle I12 des ersten Routers R1 detektiert wird, der zweite Router R2 als logisches Standard-Gateway eingerichtet wird, wobei die Erfindung vorsieht, dass im Zuge der Einrichtung des zweiten Routers R2 als Standard-Gateway eine Überprüfung der Schnittstellenmetrik am ersten und/oder zweiten Router R2 erfolgt und das in Folge der für die Schnittstelle I12 detektierten Unerreichbarkeit eine Anpassung der Schnittstellenmetrik erfolgt.

Das erfindungsgemäße Verfahren zeichnet sich also durch eine Kombination eines Routingprotokolls aus der bekannten Protokollfamilie FHRP (First-Hop Routing Protocol) zur Steigerung der Verfügbarkeit eines Standard-Gateways in Verbindung mit einer Überprüfung, Anpassung und Propagierung der Schnittstellenmetrik aus.

## Patentansprüche

1. Verfahren zur Organisation von Netzknoten in einem paketorientierten Netzwerk,
das paketorientierte Netzwerk bestehend aus mindestens einem als Standardgateway eingerichteten ersten Netzknoten (R1) und mindestens einem zweiten Netzknoten (R2),
wobei für den Fall, dass eine zumindest teilweise Unerreichbarkeit eines dem ersten Netzknoten (R1) zugeordneten Netzelements (S) an einer Schnittstelle (112) des ersten Netzknotens (R1) trotz eines einwandfrei arbeitenden Übertragungsmediums (E1), über das der erste Netzknoten (R1) mit dem zugeordneten Netzelement (S) verbunden ist, detektiert wird, der zweite Netzknoten (R2) als Standardgateway eingerichtet wird, wobei
- im Zuge der Einrichtung des zweiten Netzknotens (R2) als Standardgateway eine Überprüfung der Schnittstellenmetrik am ersten und zweiten Netzknoten erfolgt, wobei die Schnittstellenmetrik eine Maßzahl zur Bestimmung eines effizientesten Pfades im Netzwerk liefert, und
in Folge der für die Schnittstelle detektierten Unerreichbarkeit eine Anpassung der Schnittstellenmetrik derart erfolgt, dass die Schnittstellenmetrik der Schnittstelle (I12) des ersten Netzknotens (R1) erhöht wird, so dass Datenpakete über den zweiten Netzwerkknoten (R2) statt über den ersten Netzwerkknoten (R1) weitergeleitet werden, wodurch ein asymmetrisches Routing vermieden wird, wenn die Schnittstellenmetrik an übrige Netzknoten im Netzwerk und in weitere durch Netzknoten mit dem Netzwerk verbundene Netzwerke propagiert wird.

2. Verfahren nach Anspruch 1, bei dem
die Schnittstellenmetrik eines oder mehrere der folgenden Kriterien umfasst:
- Distanz eines Pfades zu einem Zielsystem,
- auf einem Pfad erzielbare Bandbreite,
- auf einem Pfad zu erwartende Verzögerung, und
- Anzahl der auf einem Pfad liegenden Netzknotenelemente.

3. Verfahren nach einem der vorhergehenden Ansprüche, bei dem die Schnittstellenmetrik über das Routing-Protokoll OSPF und/oder EIGRP und/oder IS-IS propagiert wird.

4. Verfahren nach einem der vorhergehenden Ansprüche, bei dem die Schnittstellenmetrik über das Enhanced Object Tracking Protokoll eingestellt wird.

5. Verfahren nach einem der vorhergehenden Ansprüche, bei dem ein HSRP- oder VRRP-Zustand des Netzknotens (R1) mit der Schnittstellenmetrik in Richtung eines Obertragungsmediums (E1) gekoppelt wird, über das auf Seiten des ersten Netzknotens (R1) eine Verbindung zu einem Schicht-2-Netzwerk (L2N) führt.

6. Verfahren nach einem der vorhergehenden Ansprüche, bei dem als Netzknoten (R1, R2) ein Router verwendet wird.

## Claims

1. Method for organising network nodes in a packet-oriented network, wherein the packet-oriented network comprises at least one first network node (R1) arranged as a standard gateway and at least one second network node (R2), wherein in the event that one at least partial inaccessibility of a network element (S) allocated to the first network node (R1) is detected on an interface (I12) of the first network node (R1) despite a perfectly working transmission medium (E1), by means of which the first network node (R1) is connected to the allocated network element (S), the second network node (R2) is arranged as a standard gateway, wherein
- in the course of the arrangement of the second network node (R2) as a standard gateway, a checking of the interface metric takes place on the first and second network nodes, wherein the interface metric provides a measure for determining a most efficient path in the network, and
following the inaccessibility detected for the interface, an adaptation of the interface metric takes place in such a way that the interface metric of the interface (I12) of the first network node (R1) is increased so that data packets are forwarded over the second network node (R2) instead of over the first network node (R1), whereby an asymmetrical routing is avoided where the interface metric is propagated to other network nodes in the network and into other networks connected to the network by means of network nodes.

2. Method according to claim 1, in which the interface metric comprises one or more of the following criteria:
- distance of a path to a target system,
- bandwidth achievable on a path,
- delay to be expected on a path, and
- number of network node elements on a path.

3. Method according to any one of the preceding claims, in which the interface metric is propagated by means of the routing protocol OSPF and / or EIGRP and / or IS-IS.

4. Method according to any one of the preceding claims, in which the interface metric is set by means of the Enhanced Object Tracking Protocol.

5. Method according to any one of the preceding claims, in which an H3RP or VRRP state of the network node (R1) is coupled to the interface metric in the direction of a transmission medium (E1), by means of which, on the side of the first network node (R1), a connection leads to a layer 2 network (L2N).

6. Method according to any one of the preceding claims, in which a router is used as the network node (R1, R2).

## Revendications

1. Procédé destiné à l'organisation de noeuds de réseau dans un réseau orienté paquets,
le réseau orienté paquets se composant d'au moins un premier noeud de réseau (R1) agencé en tant que passerelle standard et d'au moins un second noeud de réseau (R2),
pour le cas où une inaccessibilité au moins partielle d'un élément de réseau (S), attribué au premier noeud de réseau (R1), à une interface (I12) du premier noeud de réseau (R1) est détectée malgré un support de transmission (E1) fonctionnant sans problème, par le biais duquel le premier noeud de réseau (R1) est relié à l'élément de réseau (S) attribué, le second noeud de réseau (R2) étant agencé en tant que passerelle standard, - au cours de l'agencement du second noeud de réseau (R2) en tant que passerelle standard étant effectuée une vérification de la métrique d'interface sur les premier et second noeuds de réseau, la métrique d'interface délivrant un chiffre d'indice destiné à la détermination d'un chemin le plus efficace dans le réseau, et,
suite à l'inaccessibilité détectée pour l'interface, une adaptation de la métrique d'interface étant effectuée de manière telle que la métrique d'interface de l'interface (I12) du premier noeud de réseau (R1) est augmentée de sorte que des paquets de données sont transférés par le biais du second noeud de réseau (R2) au lieu du premier noeud de réseau (R1), ce qui évite un routage asymétrique si la métrique d'interface est propagée aux noeuds de réseau restants dans le réseau et dans d'autres réseaux reliés au réseau par des noeuds de réseau.

2. Procédé selon la revendication 1, dans lequel la métrique d'interface comprend un ou plusieurs des critères suivants :
- distance d'un chemin à un système cible,
- largeur de bande réalisable sur un chemin,
- retard à attendre sur un chemin et
- nombre des éléments de noeud de réseau présents sur un chemin.

3. Procédé selon l'une quelconque des revendications précédentes, dans lequel la métrique d'interface est propagée par le biais du protocole de routage OSPF et/ou EIGRP et/ou IS-IS.

4. Procédé selon l'une quelconque des revendications précédentes, dans lequel la métrique d'interface est réglée par le protocole de suivi d'objets amélioré.

5. Procédé selon l'une quelconque des revendications précédentes, dans lequel un état HSRP ou VRRP du noeud de réseau (R1) est couplé à la métrique d'interface en direction d'un support de transmission (E1) par le biais duquel, du côté du premier noeud de réseau (R1), une liaison mène à un réseau de couche 2 (L2N).

6. Procédé selon l'une quelconque des revendications précédentes, dans lequel un routeur sert de noeud de réseau (R1, R2).
